(19) Europäisches Patentamt
European Patent Office
Office européen des brevets

(11) **EP 4 718 414 A1**

(12) **EUROPEAN PATENT APPLICATION**

(43) Date of publication:
**01.04.2026 Bulletin 2026/14**

(21) Application number: **25203592.8**

(22) Date of filing: **22.09.2025**

(51) International Patent Classification (IPC):
**G07G 1/00** (2006.01)     **G07G 3/00** (2006.01)
**G06Q 20/20** (2012.01)     **G06N 20/00** (2019.01)
**G06V 20/52** (2022.01)

(52) Cooperative Patent Classification (CPC):
**G07G 3/003; G06N 3/0464; G06N 20/00; G06Q 20/208; G06V 20/52; G07G 1/0009; G07G 1/0054**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH LA MA MD TN**

(30) Priority: **26.09.2024 JP 2024167349**

(71) Applicant: **FUJITSU LIMITED**
**Kawasaki-shi, Kanagawa 211-8588 (JP)**

(72) Inventor: **YAMAMOTO, Takuma**
**Kawasaki-shi, Kanagawa, 211-8588 (JP)**

(74) Representative: **Hoffmann Eitle**
**Patent- und Rechtsanwälte PartmbB**
**Arabellastraße 30**
**81925 München (DE)**

(54) **INFORMATION PROCESSING PROGRAM, INFORMATION PROCESSING APPARATUS, AND INFORMATION PROCESSING SYSTEM**

(57)    An information processing program that causes a computer to perform a process including: classifying a plurality of items to be determined into one or more categories based on a plurality of appearance images of the plurality of items, the plurality of appearance images being stored in a storage area (41a) in association with corresponding prices of the plurality of items; calculating, for each of the one or more categories into which the items are classified, a statistical value of prices of a plurality of items in the category, based on the plurality of prices stored in the storage area (41a); changing a pattern for the classifying and performing the classifying and the calculating so that one or more of the statistical values satisfy a given condition; and outputting category information (41b) indicating a category of each of the plurality of items when the given condition is satisfied.

FIG.19

The scanned item and the item recognized by machine seem to be different. Would you like to scan again?
Yes    No

## Description

[Technical Field]

The present disclosure relates to an information processing program, an information processing apparatus, and an information processing system.

[Background Art]

A behavior of fraudulently obtaining items is one of the major causes of loss at self-checkout registers. For the purpose of detecting fraudulent behaviors (fraud detection), a method may be used in which items are recognized using an Artificial Intelligence (AI) technology based on an image recognition model that performs an image recognition process using captured images of the items.

For example, a method is known in which an alert is output to a Point Of Sales (POS) system based on the comparison results between the number and categories (classifications) of items recognized by the AI technology and the number and categories of items registered in the POS system through scanning of the items.

[Prior Art Reference]

[Patent Document]

[Patent Document 1] Japanese Laid-Open Patent Publication No. 2022-039930
[Patent Document 2] Japanese Laid-Open Patent Publication No. 2020-077275
[Patent Document 3] US Patent Application Publication No. 2023/0368625
[Patent Document 4] US Patent Application Publication No. 2020/0151692
[Patent Document 5] Japanese Laid-Open Patent Publication No. 2021-197106

[Summary of Invention]

[Problem to be Solved]

The image recognition process may have difficulty in accurately distinguishing between different items with similar appearances, such as bottles of wines of different brands or apples of different cultivars. Therefore, in the above-described method, when items are classified into categories and compared, different items with similar appearances in the same category may not be distinguished. If this results in failure of detection of fraudulent behaviors, the amount of loss at self-checkout registers may be increased.

The fraudulent behaviors to be detected which may result in the above-described problem are not limited to fraudulent obtainment of items. Fraudulent behaviors may include, for example, not only acts of fraudulently obtaining items but also failures to register items in the POS system due to mistakes by customers (purchasers), such as operational errors, forgetfulness, or misunderstandings.

In one aspect, one object of the present disclosure is to determine item categories suitable for fraud detection.

[Means to Solve the Problem]

According to an aspect of the embodiments, an information processing program that causes a computer to perform a process includes: classifying a plurality of items to be determined into one or more categories based on a plurality of appearance images of the plurality of items, the plurality of appearance images being stored in a storage area in association with corresponding prices of the plurality of items; calculating, for each of the one or more categories into which the items are classified, a statistical value of prices of a plurality of items in the category, based on the plurality of prices stored in the storage area; changing a pattern for the classifying and performing the classifying and the calculating so that one or more of the statistical values satisfy a given condition; and outputting category information indicating a category of each of the plurality of items when the given condition is satisfied.

[Effect of Invention]

In one aspect, item categories suitable for fraud detection can be determined.

[Brief Description of Drawings]

FIG. 1 is a diagram for explaining one example of label switching at a self-checkout register;
FIG. 2 is a diagram for explaining one example of a banana trick at a self-checkout register;
FIG. 3 is a block diagram illustrating the functional configuration of a fraud detection apparatus according to a comparative example;
FIG. 4 is a diagram illustrating an example of a category;
FIG. 5 is a diagram illustrating examples of category definitions based on appearances (shapes);
FIG. 6 is a diagram illustrating an example of the configuration of a system according to one embodiment;
FIG. 7 is a diagram illustrating an example of the configuration of a system according to one embodiment;
FIG. 8 is a block diagram illustrating an example of the hardware configuration of a computer according to one embodiment;
FIG. 9 is a block diagram illustrating an example of the functional configuration of a system according to one embodiment;
FIG. 10 is a diagram for explaining one example of clustering in an image feature space;
FIG. 11 is a diagram illustrating one example of the relationship among the number of categories, the undetected fraud-induced loss, and the false alert rate;
FIG. 12 is a diagram illustrating examples of the item information;
FIG. 13 is a flowchart for explaining an example of the operation of a category generation process;
FIG. 14 is a flowchart for explaining the operation of a first example of an evaluation index obtainment process;
FIG. 15 is a flowchart for explaining the operation of a second example of an evaluation index obtainment process;
FIG. 16 is a flowchart for explaining an example of the operation of a machine learning process;
FIG. 17 is a flowchart for explaining an example of the operation of a fraud detection process;
FIG. 18 is a diagram for explaining a first example of the fraud detection process;
FIG. 19 is a diagram illustrating an example of an output of an alert in the first example of the fraud detection process;
FIG. 20 is a diagram for explaining a second example of the fraud detection process; and
FIG. 21 is a diagram illustrating an example of an output of an alert in the second example of the fraud detection process.

[Description of Embodiments]

Hereinafter, an embodiment of the present disclosure will be described with reference to the drawings. However, the embodiment described below is merely exemplary, and it is not intended to exclude various modifications or applications of the techniques not explicitly described in the following. For example, the present embodiment can be practiced in various modifications without departing from the scope thereof. In the drawings used in the following description, elements denoted by like reference symbols denote the same or similar elements, unless otherwise stated.

(A) Comparative Example

(A-1) Fraudulent Behaviors at Self-Checkout Register

Examples of fraudulent behaviors by customers (purchasers) to fraudulently obtain items at self-checkout registers installed in stores (retailers) include, for example, label switching, banana tricks, and the like.
Label switching refers to a behavior of scanning (checking out) the label of a relatively inexpensive item instead of a relatively expensive item. A label is a label for identifying an item through reading by a machine, and may be, for example, a barcode label on which a barcode is printed. A banana trick refers to one or both of selecting a relatively inexpensive item on the screen of a self-checkout register instead of a relatively expensive item, among items without labels, such as fresh produce, and declaring a smaller quantity.

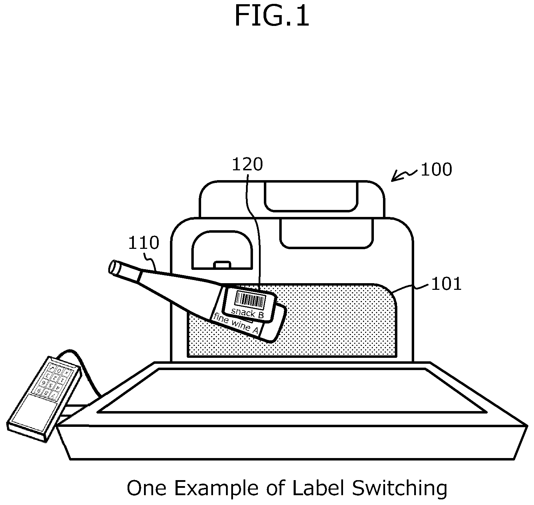

FIG. 1 is a diagram for explaining one example of label switching at a self-checkout register 100. The self-checkout register 100 is one example of a POS device. FIG. 1 illustrates a situation in which a label of a snack 120 (labeled "snack B") is presented so as to conceal a label of a bottle of fine wine 110 (labeled "fine wine A") in a label scanning area 101 of the self-checkout register 100. In this case, since the price of the relatively inexpensive snack 120 is registered in place of the price of the relatively expensive bottle of fine wine 110 in the self-checkout register 100, the difference between the price of the bottle of fine wine 110 and the price of the snack 120 becomes a loss for the retailer.

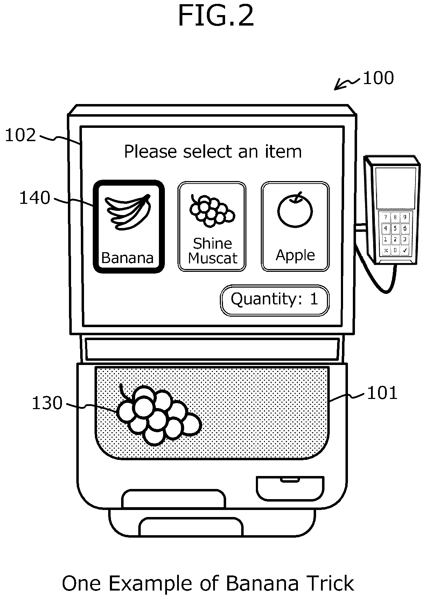

FIG. 2 is a diagram for explaining one example of a banana trick in the self-checkout register 100. FIG. 2 illustrates a situation in which a bunch of bananas 140 is selected on the screen (POS screen) 102 of the self-checkout register 100 instead of a bunch of Shine Muscat (Shine Muscat grapes) 130. In this case, since the price of the relatively inexpensive bananas 140 is registered in place of the price of the relatively expensive Shine Muscat 130 in the self-checkout register 100, the difference between the price of the Shine Muscat 130 and the price of the bananas 140 becomes the loss for the retailer.

(A-2) Description of Comparative Example

In order to detect the above-described fraudulent behaviors by incorrectly registering items, it is important to appropriately recognize the items from captured images of the appearances of the items. However, it may be difficult to accurately identify different items with similar appearances, and item recognition at the self-checkout register 100 has limitations in identifying individual items based on images thereof.

Here, a comparative example is considered in which the categories of items are estimated, instead of identifying the items based on images thereof.

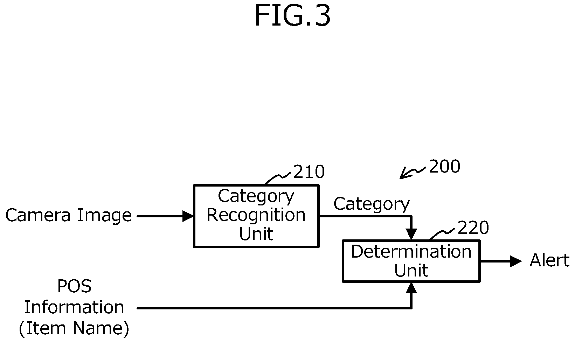

FIG. 3 is a block diagram illustrating the functional configuration of a fraud detection apparatus 200 according to a comparative example. The fraud detection apparatus 200 according to the comparative example determines whether or not a fraudulent behavior is being performed by matching an image of an item captured by a camera (camera image) with the POS information of the item registered in the self-checkout register 100.

The camera may be one of various imaging devices (not illustrated in FIG. 1 and FIG. 2) installed in the store with an angle of view such that the self-checkout register 100 is viewed from a broad perspective, for example. The POS information may include information (e.g., item name) for uniquely identifying the item registered in the self-checkout register 100 by scanning a label or by receiving the selection of the item on the screen 102.

The fraud detection apparatus 200 includes a category recognition unit 210 and a determination unit 220. The category recognition unit 210 recognizes the category of the item based on the camera image, and may be, for example, an image recognition model (machine learning model) trained to classify the appearance image of the item into a given category. The determination unit 220 converts the POS information into a category based on information that has been set in advance to associate the item with the category, and outputs an alert to the self-checkout register 100 when the category determined through the conversion and the category recognized by the category recognition unit 210 do not match.

As a result, even when a plurality of items have similar appearances, as long as the items belong to different categories, a mismatch is detected in the category comparison, which enables the detection of a fraudulent behavior and thus allows the output of an alert.

In the method of the comparative example, the user defines the category for each item in advance. The category recognition unit 210 is trained to output, in response to an input of an appearance image of an item, the category defined in advance for the appearance image (item).

The method of the comparative example, however, may have difficulty in subjectively defining categories.

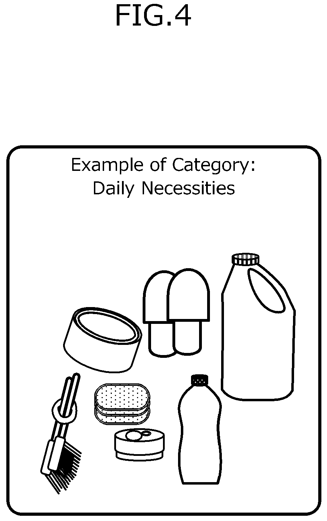

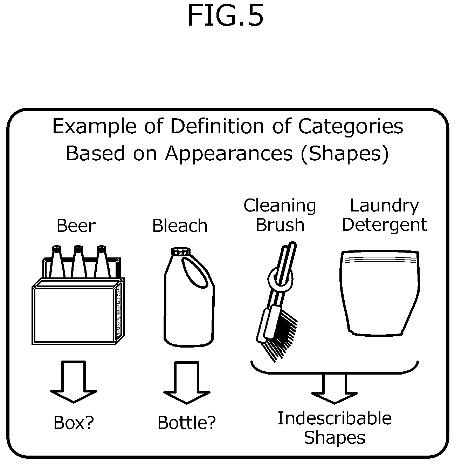

FIG. 4 is a diagram illustrating an example of a category, and FIG. 5 is a diagram illustrating examples of category definitions based on appearances (shapes).

As illustrated in FIG. 4, in cases where a category including a lot of items, such as daily necessities, is set, the items in the category may not be distinguished, which may result in an increase in the amount of loss due to frauds. As exemplified in this case, appropriately determining the granularity of categories may be difficult.

Alternatively, for example, when categories are defined based on appearances (shapes) to group items with similar looks, many items may be difficult to be classified. As illustrated in FIG. 5, when categories, such as "Box" (box or case) and "Bottle" (bottle), are defined as examples of shapes and items are associated with these categories, the shapes of many items may be difficult to be described. As a result, users may have difficulty associating items with the appropriate categories.

Therefore, in one embodiment, a method for determining categories of items suitable for fraud detection will be described. In addition, in another aspect, a method for generating appropriate training data for an image recognition model that performs fraud detection will be described in one embodiment. Furthermore, in a further aspect, a method for performing fraud detection by using the image recognition model trained with the training data will be described in one embodiment.

(B) Description of One Embodiment

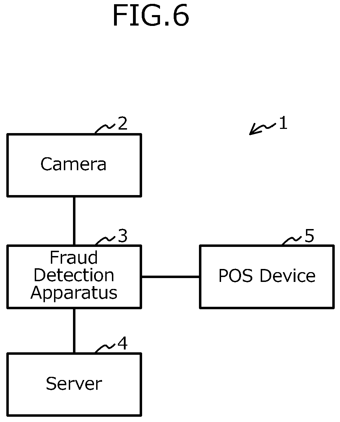

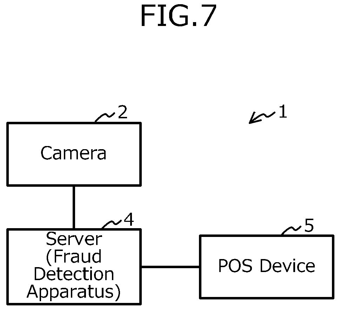

FIG. 6 and FIG. 7 are diagrams illustrating an example of the configuration of a system 1 according to one embodiment. The system 1 is one example of an information processing system or fraud detection system and may be applied to a system including a self-checkout register installed in a store, such as a retailer, for example.

As illustrated in FIG. 6, the system 1 may include, as an example, one or more cameras 2, one or more fraud detection apparatuses 3, one or more servers 4, and one or more POS devices 5.

Each POS device 5 is one example of an information processing apparatus or computer, and is a self-checkout apparatus that enables registration of items by a customer, e.g., a self-checkout register. Registration of items may include scanning a label on the item or receiving selecting the item on the screen of the POS device 5. The POS device 5 may output, as event information, POS information including information for uniquely identifying an item registered by the customer (as one example, the item name) to the fraud detection apparatus 3. The POS device 5 also may include various functions for performing a settlement process (payment, checkout) of items by the customer, in addition to registration of items.

It should be noted that various identifiers, such as an item code or a code on the POS system, may be used as information for uniquely identifying an item, in place of or in addition to the item name. In the following description, for the sake of convenience, information for uniquely identifying an item is referred to as a "item name".

The POS device 5 may be included in a POS system that manages POS information among a plurality of POS devices 5, among a plurality of stores, etc., and may be communicatively connected to other devices in the POS system via a network (not illustrated), for example. In this case, the POS device 5 may output various information, such as POS information and payment information, to the POS system.

The cameras 2 may be various imaging devices installed in the store with an angle of view (as one example, the angle of view illustrated in FIG. 1) such that the POS device 5 is viewed from a broad perspective. A footage (camera footage, video) captured by the camera 2 may include a plurality of (a plurality of frames of) captured images (camera images) including at least the POS device 5 and the appearance of an item, e.g., an item that the customer is registering on the POS device 5, within the imaging range. The captured images may include the customer. The camera footage captured by the camera 2 is output to the fraud detection apparatus 3.

It should be noted that the camera 2 may be fixedly installed in the store so that the imaging range, e.g., the angle of view, and the resolution remains constant across the plurality of frames of the camera footage. Alternatively, if the camera 2 has an angle of view and resolution that allow cropping of a certain image region including at least the POS device 5 and the appearance of an item across a plurality of frames, the camera 2 may be installed in the store so that the imaging range changes over time.

Furthermore, one camera 2 may be installed to capture a plurality of POS device 5. In this case, the camera 2 may have at least an angle of view (e.g., wide angle) and resolution that allow cropping of a plurality of certain image regions, each including at least the POS device 5 and the appearance of an item in each frame, across a plurality of frames.

The fraud detection apparatus 3 is one example of an information processing apparatus or computer, and performs a fraud detection process to detect fraudulent behaviors based on camera images obtained from the camera 2 and event information obtained from the POS device 5. The fraud detection process may be achieved using an image recognition model (machine learning model) trained by techniques such as Deep Learning (DL), for example. The fraud detection apparatus 3 may be a computer, such as an edge terminal installed in the vicinity or inside of the POS device 5, or may be a computer, such as a server, installed in the back office of the store, at a remote location, or the like, via a network. Examples of the remote location include other stores, the headquarters or branch offices of the retailer, and data centers, for example.

In one embodiment, the description will focus on the fraudulent behavior illustrated in FIGS. 1 and 2 as examples of the fraudulent behaviors to be detected by the fraud detection apparatus 3. However, the fraudulent behaviors to be detected are not limited to fraudulent obtainment of items. For example, the method according to one embodiment may also detect failures in registering items into the POS system (e.g., POS device 5) due to mistakes by customers, such as operational errors, forgetfulness, or misunderstandings.

The server 4 is one example of an information processing apparatus or computer and generates category information used for training (machine learning process) of the image recognition model that embodies a fraud detection process by the fraud detection apparatus 3. The category information is information indicating the respective categories (optimal categories) of a plurality of items that are to be processed (to be determined), and is one example of training data used for training of the image recognition model. The training data may associate an image of the appearance of an item (appearance image) with the category of the item indicated by the category information. The plurality of items that are to be processed may be, for example, a plurality (for example, all) of the items sold in the store where the POS device 5 is installed.

The training of the image recognition model may be performed in the fraud detection apparatus 3 that has received the training data input from the server 4, or may be performed on the server 4. In the case where the training is performed on the server 4, the server 4 may output (provide) the trained image recognition model to the fraud detection apparatus 3. Additionally, the trained image recognition model may be retrained in the server 4 or the fraud detection apparatus 3, in response to changes in the installation environment of one or both of the camera 2 and the POS device 5, changes in the items to be processed, or the like.

As described above, the machine learning process (training and retraining) of the image recognition model may be performed in one or both of the server 4 and the fraud detection apparatus 3. An inference process using the image recognition model may be performed in the fraud detection apparatus 3 as at least a part of the fraud detection process.

It should also be noted that the functions of the server 4 and the functions of the fraud detection apparatus 3 may be collectively embodied in a single server 4, as exemplified in FIG. 7. In this case, the server 4 may have the functions of the fraud detection apparatus 3, in addition to the function of generating the category information. In the following description, it is assumed that the system 1 includes the configuration illustrated in FIG. 6.

(B-1) Example of Hardware Configuration

The fraud detection apparatus 3, the server 4, and the POS device 5 included in the system 1 may each have a similar hardware configuration.

The fraud detection apparatus 3 according to one embodiment may be a virtual server (Virtual Machine, VM) or a physical server. In addition, the functions of the fraud detection apparatus 3 may be embodied by a single computer or by two or more computers. Moreover, at least a part of the functions of the fraud detection apparatus 3 may be embodied using hardware (HW) resources and network (NW) resources provided by a cloud environment.

Furthermore, the server 4 according to one embodiment may be a virtual server (VM) or a physical server. In addition, the functions of the server 4 may be embodied by a single computer or by two or more computers. Moreover, at least a part of the functions of the server 4 may be embodied using HW resources and NW resources provided by a cloud environment.

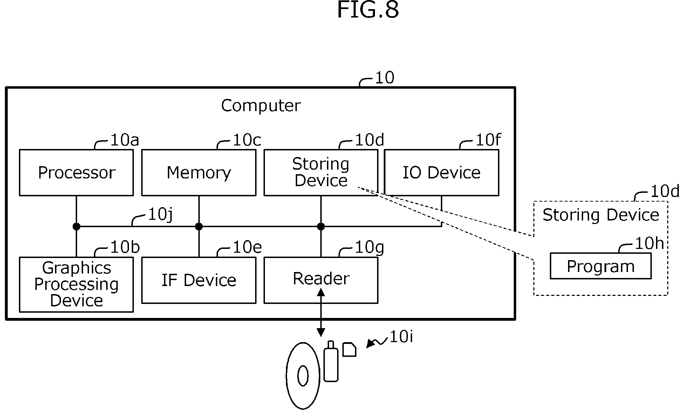

Hereinafter, examples of the hardware configurations of the computers that implement the respective functions of the fraud detection apparatus 3, the server 4, and the POS device will be described using a computer 10 illustrated in FIG. 8 as an example representing these computers.

FIG. 8 is a block diagram illustrating an example of the hardware configuration of the computer 10 according to one embodiment. When a plurality of computers are used as HW resources for embodying the fraud detection apparatus 3, the server 4, or the POS device, each computer may have the HW configuration illustrated in FIG. 8.

As illustrated in FIG. 8, the computer 10 may include, as an example, a processor 10a, a graphics processing unit 10b, a memory 10c, a storing device 10d, an Interface (IF) device 10e, an Input / Output (IO) device 10f, and a reader 10g, as the HW configuration.

The processor 10a is one example of an arithmetic processing unit that performs various control and computations. The processor 10a may be communicably connected to each block in the computer 10 via a bus 10j. The processor 10a may be a multiprocessor having a plurality of processors, may be a multicore processor having a plurality of processor cores, or may be configured to have a plurality of multicore processors.

Examples of the processor 10a include Integrated Circuits (ICs), such as a CPU, MPU, APU, DSP, ASIC, or FPGA, for example. It should be noted that two or more combinations of these integrated circuits may be used for the processor 10a. CPU is an abbreviation for Central Processing Unit, and MPU is an abbreviation for Micro Processing Unit. APU is an abbreviation for Accelerated Processing Unit. DSP is an abbreviation for Digital Signal Processor, ASIC is an abbreviation for Application Specific IC, and FPGA is an abbreviation for Field-Programmable Gate Array.

The graphics processing unit 10b controls screen displays to an output device such as a monitor, which is a part of the IO device 10f. Additionally, the graphics processing unit 10b may have a configuration as an accelerator that performs machine learning processes and inference processes using machine learning models. Examples of the graphics processing unit 10b include various arithmetic processing units, such as integrated circuits (ICs), e.g., a Graphic Processing Unit (GPU), APU, DSP, ASIC, or FPGA.

The memory 10c and the storing device 10d each store information, such as various types of data and programs. Examples of the memory 10c include one or both of a volatile memory, such as a Dynamic Random Access Memory (DRAM), and a non-volatile memory such as a Persistent Memory (PM), for example. Examples of the storing device 10d include various storing devices such as magnetic disk devices, e.g., a Hard Disk Drive (HDD), semiconductor drive devices, e.g., a Solid State Drive (SSD), and non-volatile memory. Examples of the non-volatile memory include, for example, a flash memory, a Storage Class Memory (SCM), and a Read Only Memory (ROM).

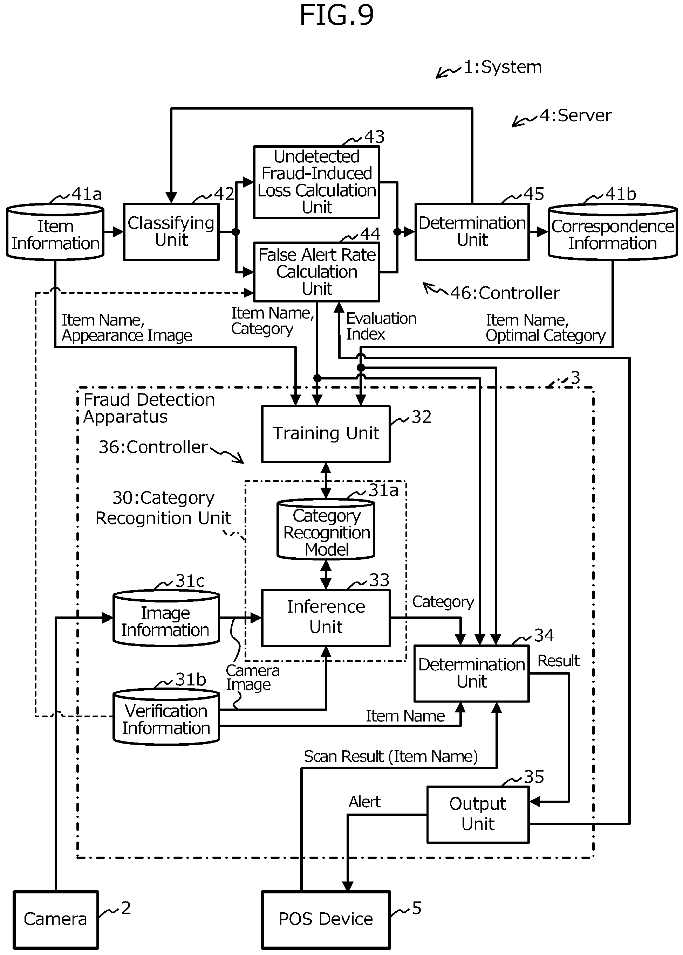

The storing device 10d may store a program 10h (information processing program) for embodying all or a part of the various functions of the computer 10. For example, the processor 10a in the fraud detection apparatus 3 may embody the functions of a controller 36 (see FIG. 9) described later by loading the program 10h (e.g., a machine learning program, fraud detection program, etc.) stored in the storing device 10d into the memory 10c and executing the program 10h. For example, the processor 10a in the server 4 can embody the functions of a controller 46 (see FIG. 9) by loading the program 10h (e.g., a category generation program, training data generation program, machine learning program, etc.) stored in the storing device 10d into the memory 10c and executing the program 10h. Furthermore, for example, the processor 10a in the POS device 5 can embody the functions of the POS device 5 by loading the program 10h (e.g., a POS program, etc.) stored in the storing device 10d into the memory 10c and executing the program 10h.

The IF device 10e is one example of a communication IF that performs processing, such as control on connections and communications between the computer 10 and the camera 2, between computers 10, between the computer 10 and another computer, and the like. For example, the IF device 10e may include an adapter that is compliant with electronic communications, such as Ethernet® (e.g., Local Area Network (LAN)), or optical communications, such as Fibre Channel (FC), etc. This adapter may support one or both of wireless and wired communication methods. It should be noted that the program 10h may be downloaded from a network to the computer 10 via the communication IF and stored in the storing device 10d.

The IO device 10f may include one or both of an input device and an output device. Examples of the input device include a keyboard, a mouse, and a touch panel, for example. Examples of the output device include a monitor, a projector, and a printer, for example. The output device may be connected to the graphics processing unit 10b. The IO device 10f may also include a touch panel that integrates an input device and an output device. For example, the IO device 10f in the POS device 5 may include a touch panel as a user IF for customers.

The reader 10g is one example of a reader that reads information, such as data and programs, recorded on a storage medium 10i. The reader 10g may include a connection terminal or device to which the storage medium 10i can be connected or inserted. Examples of the reader 10g include adapters that are compliant with standards, such as Universal Serial Bus (USB), drive devices that access recording disks, and card readers that access flash memory, such as SD cards, for example. It should be noted that the program 10h may be stored in the storage medium 10i, and the reader 10g may read the program 10h from the storage medium 10i and store the program 10h in the storing device 10d.

Examples of the storage medium 10i include, as an example, non-transitory computer-readable storage media (recording medium) such as magnetic/optical disks and flash memory. Examples of magnetic/optical disks may include, as an example, flexible disks, Compact Discs (CDs), Digital Versatile Discs (DVDs), Blu-ray discs, and Holographic Versatile Discs (HVDs). Examples of the flash memory may include, as an example, semiconductor memory such as USB memory and SD cards.

The HW configuration of the computer 10 described above is exemplary. Accordingly, HW components may be added or deleted (any block may be added or deleted, for example), divided, integrated in any combination, or buses may be added or deleted, in the computer 10, as appropriate.

For example, the POS device 5 may include a hardware configuration specific to a self-checkout register, in addition to the hardware configuration illustrated in FIG. 8. Examples of the hardware configuration specific to a self-checkout register include a scanner device that reads labels (e.g., barcode labels) and various payment devices that perform a settlement process (payment) using cash, credit cards, electronic money, or the like, for example. The scanner device may include one or both of a scanner integrated with the POS device 5 and a handheld scanner that can be held by the customer. It should be noted that the scanner device may also include a wireless communication device that reads (recognizes) information recorded in an IC tag (label), such as a Radio Frequency Identification (RFID) tag, attached to an item, in place of or in addition to a barcode label.

(B-2) Example of Functional Configuration

FIG. 9 is a block diagram illustrating an example of the functional configuration of a system 1 according to one embodiment. In the following description, it is assumed for the sake of convenience that each functional configuration provided in the system 1 is provided in only one of the fraud detection apparatus 3 and the server 4, but this is not limiting. Each functional configuration may be provided redundantly in both the fraud detection apparatus 3 and the server 4, or may be provided in a distributed or divided manner.

The fraud detection apparatus 3 may include, as an example, a training unit 32, an inference unit 33, a determination unit 34, and an output unit 35, as the functional configuration. The fraud detection apparatus 3 may also include a storage area capable of storing at least one type of information of a category recognition model 31a, verification information 31b, and image information 31c. The inference unit 33 and the category recognition model 31a are examples of the category recognition unit 30. In addition, the training unit 32, the inference unit 33 (category recognition unit 30), the determination unit 34, and the output unit 35 are examples of a controller 36.

The server 4 may include, as an example, a classification unit (division unit) 42, an undetected fraud-induced loss calculation unit 43, a false alert rate calculation unit 44, and a determination unit 45, as the functional configuration. The server 4 may also have a storage area capable of storing at least one type of information of item information 41a and correspondence information 41b. The classification unit 42, the undetected fraud-induced loss calculation unit 43, the false alert rate calculation unit 44, and the determination unit 45 are examples of a controller 46.

Each of the functions of the controller 36 of the fraud detection apparatus 3 and the controller 46 of the server 4 may be embodied by the processor 10a illustrated in FIG. 8 by executing the program 10h on the memory 10c. In addition, each of the functions of the storage area of the fraud detection apparatus 3 and the storage area of the server 4 may be embodied by a storage area in one or both of the memory 10c and the storing device 10d illustrated in FIG. 8.

In response to a label on an item being scanned by a scanner device, such as a scanner or wireless communication device, the POS device 5 outputs the scan result including the item name recognized through scanning, to the fraud detection apparatus 3 (determination unit 34). The scan result is one example of POS information or event information.

Furthermore, in response to obtaining an alert indicating that a fraudulent behavior has been detected related to the scan result, from the fraud detection apparatus 3 (output unit 35), the POS device 5 may perform an alert process. The alert process may include one or both of a process of displaying a screen according to the content of the alert on the IO device 10f (e.g., touch panel) of the POS device 5, and a process of outputting a notification according to the content of the alert to employees of the retailer (store), for example. Moreover, in the alert process, the POS device 5 may notify the content of the alert to the POS system.

(Description of Server 4)

First, the server 4 according to one embodiment will be described. The server 4 may output categories, which are examples of training data for the category recognition model 31a, by performing the following processes (i) to (iii).

(i) The server 4 classifies a plurality of items into one or more categories based on a plurality of appearance images stored in a storage area that stores, in association, the appearance image and the price of each of the plurality of items to be processed.
(ii) For each of the one or more categories classified, the server 4 calculates a statistical value of the prices of a plurality of items in the category, based on the plurality of prices stored in the storage area.
(iii) The server 4 changes the classification pattern so that one or more calculated statistical values satisfy the given condition, and performs the classifying and the calculating described above.

In this manner, the server 4 according to one embodiment generates and outputs categories (optimal categories) that satisfy the given condition based on objective criteria. The given condition may be at least one of the following conditions (a) and (b). It should be noted that the above-described processes (i) to (iii) are examples of the process in the case where the given condition is the condition (a) below.

(a) An undetected fraud-induced loss is small.

The undetected fraud-induced loss is a loss induced when fraudulent behaviors are overlooked (undetected) during a fraud detection process performed by the category recognition model 31a trained based on the categories generated by the server 4. By including the condition (a) in the given condition, the loss when fraudulent behaviors are overlooked can be kept to a relatively small level.
(b) A false alert rate is low.
The false alert refers to a case in which a behavior is erroneously determined as fraudulent even though it is not a fraudulent behavior (false positive) and an alert is output, during the fraud detection process performed by the category recognition model 31a trained based on the categories generated by the server 4. The false alert rate indicates the proportion of cases where false alerts occur among the cases that are not actually fraudulent. Frequent false alerts, such as a high false alert rate, have adverse effects on both retailers and customers. The false alert rate is one of the important Key Performance Indicators (KPIs). By including the condition (b) in the given condition, the KPI can be improved.
In the following description, a case where both the condition (a) and the condition (b) are included in the given condition is exemplified, but this is not limiting. The given condition may include only one of the condition (a) and the condition (b) (for example, only the condition (a) or only the condition (b)).
Each of the one or more categories generated by the server 4 is a group for grouping one or more items. Since the categories are generated to satisfy the given condition, the categories are not necessarily understandable by "humans", such as the administrator of the system 1, employees, or customers (or are not necessarily convincing to the people), and the categories may be referred to as pseudo categories or artificial categories, for example.
The server 4 may define the given condition as an objective function and generate categories that optimize the objective function. For example, the server 4 may calculate the value of the objective function using the dataset in which the item name, image, and price of each of the plurality of items to be processed are associated with one another, and search for categories that minimize the calculated value.
As one example, the server 4 may use the condition (a) and the condition (b) as objective functions, and identify one or more categories that optimize the respective objective functions of the condition (a) and the condition (b). As the process for optimizing a plurality of objective functions, various techniques, such as a mathematical optimization process or multi-objective optimization process, in view of the plurality of objective functions, may be used. Examples of the multi-objective optimization process include various techniques, such as a heuristic process or multi-objective optimization process using evolutionary computation (evolutionary multi-objective optimization).
In the following, the mathematical optimization process will be described as an example of a process for optimizing a plurality of objective functions.

(One Example of Mathematical Optimization Process)

The server 4 may determine a set of item names G, candidates of category sets (category set candidates) $\omega_i$ obtained by classifying the elements of the set of item names G, and categories $c_k^i$ included in the category set candidate $\omega_i$, as exemplified by the following formulas (1) to (3).

$$G = \{g_1, \ g_2, \ ..., \ g_N\} \qquad\qquad ... (1)$$

$$\omega_i = \{c_1^i, \ c_2^i, \ ..., \ c_K^i\} \qquad\qquad ... (2)$$

$$c_k^i = \{g_j\} \qquad\qquad ... (3)$$

In the above formula (1), g represents one item name, and N represents the total number of items to be processed. In the above formula (2), K represents the number of categories. K may be a predefined constant, or a variable that changes from time to time or gradually in the process of mathematical optimization. i is one or more variables representing a category classification pattern.

In the above formulas (2) and (3), $c_k^i$ represents the $k^{th}$ category in the $i^{th}$ classification pattern. k is a variable for identifying categories and is an integer equal to or greater than 1 and not more than K. In the above formula (3), j is one or more variables representing items classified into (associated with) the category $c_k^i$. $g_j$ represents each item name of one or more items associated with (classified into) $c_k^i$. It should be noted that when the family of all possible category set candidates $\omega_i$ is defined as $\Omega_G$, then $|\Omega_G| = B_N$ (Bell number) holds.

As exemplified in the following formulas (4) and (5), when the undetected fraud-induced loss is defined as $L(\omega_i)$, and the false alert rate is defined as $E(\omega_i)$ for a given category set candidate $\omega_i$, the optimal set of categories $\omega^\wedge$ may be obtained, for example, by the following formula (6).

$$L(\omega_i) = \frac{1}{K}\sum_k m_{c_k} \qquad\qquad ... (4)$$

$$E(\omega_i) = 1 - Acc(\omega_i) \qquad\qquad ... (5)$$

$$\widehat{\omega} = \underset{\omega_i \in \Omega_G}{\mathrm{argmin}}(L(\omega_i) \quad E(\omega_i))^T \qquad\qquad ... (6)$$

In the above formula (4), $mc_k$ represents the statistical value of the prices of the items included in (belonging to) the category $c_k$. As one example, $mc_k$ may represent the maximum value of the price differences for all combinations of items included in the category $c_k$. In this case, the undetected fraud-induced loss $L(\omega_i)$ represents the average value of the respective price differences (statistical values) calculated for all the categories $c_1$ to $c_K$ included in the category set candidate $\omega_i$.

It should be noted that the undetected fraud-induced loss $L(\omega_i)$ is not limited to the one defined by the above formula (4). Instead of the maximum price difference, $mc_k$ may be a statistical value, such as the variance, range, or standard deviation, of the prices of items included in (belonging to) the category $c_k$. It should be noted that the statistical value may also include a representative value, such as the maximum, minimum, median, and average, of the prices of items included in the category $c_k$.

In the above formula (5), Acc represents the accuracy in the case where the category recognition model 31a recognizes categories from item images according to the category set candidate $\omega_i$. The false alert rate $E(\omega_i)$ is a value obtained by subtracting the accuracy from 1, and may be, for example, the probability of false positive and false negative.

It should be noted that the false alert rate $E(\omega_i)$ is not limited to the one defined by the above formula (5). Instead of 1 minus the accuracy, the false alert rate $E(\omega_i)$ may also be the probability of false positives when the category recognition model 31a recognizes categories from item images according to the category set candidate $\omega_i$.

In the above formula (6), the set of optimal categories $\omega^\wedge$ represents the category set candidate $\omega_i$ that minimizes both the undetected fraud-induced loss $L(\omega_i)$ and the false alert rate $E(\omega_i)$ when the items are classified into categories according to the $i^{th}$ classification pattern. argmin is a function to simultaneously optimize the respective values of the undetected fraud-induced loss $L(\omega_i)$ and the false alert rate $E(\omega_i)$. In the above formula (6), the transposed matrix in which the undetected fraud-induced loss $L(\omega_i)$ and the false alert rate $E(\omega_i)$ are represented in the form of vectors of $L(\omega_i)$ and $E(\omega_i)$ is used as an argument for argmin.

As described above, the server 4 may, for example, randomly classify the N items into the K categories (refer to the formula (1) to the formula (3) above), and calculate the undetected fraud-induced loss L and the false alert rate E in each case (refer to the formula (4) and the formula (5) above). The server 4 sequentially changes the combination (classification) patterns of the correspondence relationship between items and categories, sequentially classifies the N items into the K categories, and identifies the classification pattern where the undetected fraud-induced loss L and the false alert rate E become minimum by argmin (see the above formula (6)). The server 4 then outputs the identified classification pattern, in other words, the optimal set of categories $\omega^\wedge$, as the correspondence information 41b indicating the correspondence relationship between item names and categories.

(One Example of Multi-Objective Optimization Process)

In the above-described method, the number of combination patterns for classifying the N items into the K categories becomes enormous, which may result in extended processing time. Therefore, as one example of the multi-objective optimization process, a method for obtaining an optimal (quasi-optimal) solution by a heuristic process will be described.

Here, in a fraud detection process by the fraud detection apparatus 3, through image recognition of a captured image of an item, the category, to which the item of the captured image belongs, is determined. Therefore, the server 4 may include items with similar appearances in the same category.

For example, the server 4 may cluster a plurality of items based on image features extracted from images of the items. As the image feature, for example, a feature vector (real-valued vector) extracted from an intermediate layer of a convolutional Neural Network (NN) into which an image is input may be used. As one example, if the size (resolution) of an image is $512 \times 512$ px (pixels), the image feature may be a 256-dimensional real-valued vector obtained from the intermediate layer of the convolutional NN into which that image is input. An example of the convolutional NN may be a feature extractor similar to that used in the image recognition model, for example. It should be noted that the image features are not limited to such feature vectors, and various types of information that can represent the similarity between images may be used.

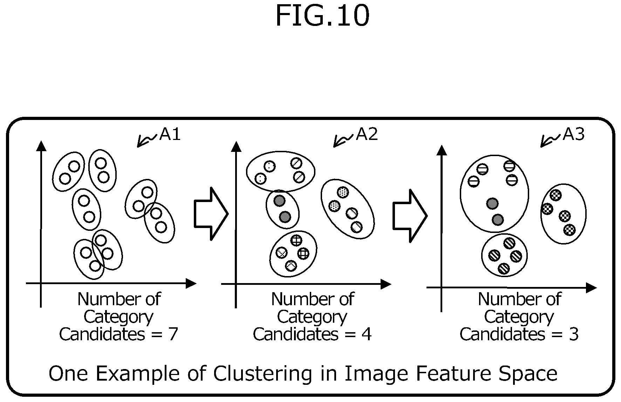

FIG. 10 is a diagram for explaining one example of clustering in an image feature space. In each graph on the two-dimensional space denoted by the reference symbols A1 to A3 in FIG. 10, each plot (point) represents an image feature of one item. The server 4 may generate a category set candidate by merging image features that are close in distance on the two-dimensional space through hierarchical clustering using the clustering method based on image features. It should be noted that, for the sake of convenience, FIG. 10 illustrates the image features on the two-dimensional space, but in practice, image features that are close in distance on a multi-dimensional (for example, high-dimensional) space may be merged.

The server 4 may, for example, repeatedly generate a category set candidate $\omega$ and calculates the undetected fraud-induced loss L and the false alert rate E for that category set candidate $\omega$ until the given condition is satisfied.

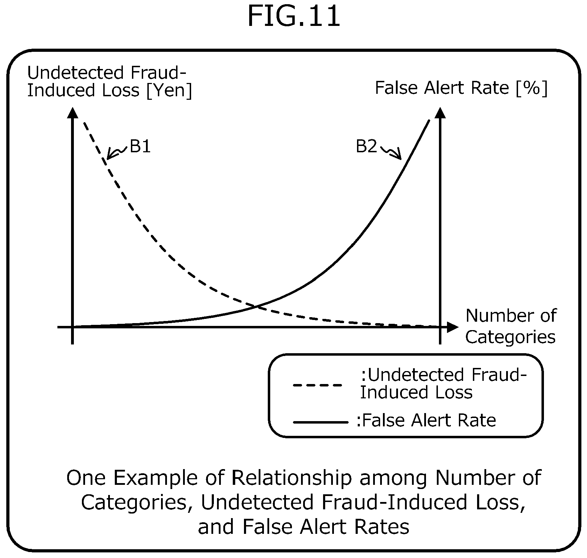

FIG. 11 is a diagram illustrating one example of the relationship among the number of categories, the undetected fraud-induced loss L, and the false alert rate E. The horizontal axis of FIG. 11 represents the number of categories (number of category candidates), the left vertical axis represents the undetected fraud-induced loss L (yen), and the right vertical axis represents the false alert rate E (%). The dashed-line graph denoted by the reference symbol B1 indicates the change of the undetected fraud-induced loss L with respect to the number of categories, and the solid-line graph denoted by the reference symbol B2 indicates the change of the false alert rate E with respect to the number of categories.

As illustrated in FIG. 11, as the number of categories increases, the undetected fraud-induced loss L decreases, but the false alert rate E increases; when the number of categories becomes maximum (the number of categories equals the number of items), the undetected fraud-induced loss L becomes minimum, but the false alert rate E becomes maximum. On the other hand, as the number of categories decreases, the false alert rate E decreases, but the undetected fraud-induced loss L increases; when the number of categories becomes minimum (all items are included in one category), the false alert rate E becomes minimum, but the undetected fraud-induced loss L becomes maximum.

In this manner, the undetected fraud-induced loss L and the false alert rate E have a trade-off relationship with respect to the number of categories. Therefore, in the server 4, the upper limit amount (yen) of the undetected fraud-induced loss L may be set in advance as the threshold for the condition (a), and the upper limit rate (%) of the false alert rate E may be set in advance as the threshold for the condition (b), for the given condition. The server 4 may perform optimization of the objective function so that the given condition including these thresholds is satisfied.

As one example, as denoted by the reference symbol A1 in FIG. 10, through hierarchical clustering for 14 image features (images), the server 4 generates category candidates including a plurality of image features, which are close in distance on the two-dimensional space, for example, of which distances are equal to or less than a given threshold. In the example of the reference symbol A1, seven category candidates are generated. The server 4 calculates the undetected fraud-induced loss L and the false alert rate E in the case where the 14 items are classified into the seven category candidates, and if at least one of the undetected fraud-induced loss L and the false alert rate E exceeds the corresponding thresholds, the server 4 performs regeneration of category candidates, for example, further merging of the category candidates or image features.

As denoted by the reference symbol A2 in FIG. 10, for the seven category candidates, the server 4 generates category candidates close in distance on the two-dimensional space or category candidates including image features. In the example of the reference symbol A2, four category candidates are generated. The server 4 calculates the undetected fraud-induced loss L and the false alert rate E in the case where the 14 items are classified into the four category candidates, and if at least one of the undetected fraud-induced loss L and the false alert rate E exceeds the corresponding thresholds, the server 4 performs regeneration of category candidates, for example, further merging of the category candidates or image features.

As denoted by the reference symbol A3 in FIG. 10, for the four category candidates, the server 4 generates category candidates close in distance on the two-dimensional space or category candidates including image features. In the example of the reference symbol A3, three category candidates are generated. The server 4 calculates the undetected fraud-induced loss L and the false alert rate E in the case where the 14 items are classified into the three category candidates, and if the given condition including the both are equal to or less than the corresponding thresholds is satisfied, the server 4 outputs the category candidates as the optimal categories.

It should be noted that FIG. 10 illustrates an example in which the number of category candidates decreases as clustering proceeds, but this is not limiting, and a method in which the number of category candidates is increased (category candidates are sequentially divided) may also be used.

Furthermore, in the above-described mathematical optimization process, the server 4 may apply the above-described hierarchical clustering method in the heuristic process, to the processes of the formulas (1) to (3) in which N items are randomly classified into K categories.

(Description of Functional Configuration Example of Server 4)

Next, an example of the functional configuration of the server 4 for embodying the above-described processes will be described with reference to FIG. 9.

The classification unit 42 classifies a plurality of items to be processed into one or more categories based on the item information 41a stored in the storage area.

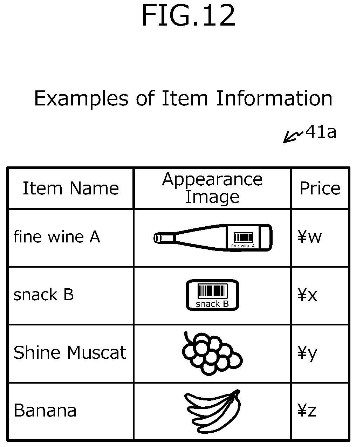

FIG. 12 is a diagram illustrating examples of the item information 41a. The item information 41a is information that associates an appearance image of each of a plurality of items to be processed with the price thereof. As illustrated in FIG. 12, the item information 41a may include an item name as one example of information uniquely identifying an item, an appearance image of the item, and a price of the item.

The appearance image is an image indicating the appearance of the item, and may be, as one example, a captured image obtained by capturing the item with an imaging device such as the camera 2, or may be various types of images such as images or illustrations provided by the manufacturer of the item. It should be noted that the appearance image may be an image that has undergone various processing such as correction, transformation, or cropping on the above images. The same applies to the following descriptions.

The price is the price of the item, and may be, as one example, the selling price of the item in a store where the POS device 5 is installed, or the original price of the item, or a price obtained by various methods such as the average, maximum, or minimum price across multiple stores.

The classification unit 42 classifies a plurality of items into one or more categories based on the plurality of appearance images included in the item information 41a. As one example, in the case where multi-objective optimization process is performed, the classification unit 42 extracts the image feature of each of the plurality of appearance images, and classifies (categorizes) the plurality of items into one or more categories based on the similarity between the image features. The classification result may be managed, for example, as correspondence information (category information) between item names and categories.

The undetected fraud-induced loss calculation unit 43 calculates a statistical value of the prices of a plurality of items in each of one or more categories classified, based on the plurality of prices included in the item information 41a. The undetected fraud-induced loss calculation unit 43 then calculates the above-described undetected fraud-induced loss L by calculating the average value, etc., of the calculated statistical value for each category.

For example, the undetected fraud-induced loss calculation unit 43 may obtain the prices of the items from the item information 41a based on the item names that are associated with the same category in the classification result by the classification unit 42, and calculate the statistical value based on the obtained prices. It should be noted that the maximum value of the price differences may be obtained, for example, by subtracting the minimum price from the maximum price among the items in the same category.

The false alert rate calculation unit 44 calculates the false alert rate E of the category recognition model 31a in a case where the category recognition model 31a is trained based on one or more categories classified.

As one example, the false alert rate calculation unit 44 may perform an evaluation index obtainment process for the false alert rate using the category recognition model 31a each time the classification result is output from the classification unit 42. The false alert rate calculation unit 44 may calculate the above-described false alert rate E based on the evaluation index, such as accuracy and false positive rate, obtained through the evaluation index obtainment process.

The evaluation index obtainment process may include a machine learning process (training) of a machine learning model, and a verification process of the trained machine learning model using the verification information 31b described later. Examples of the evaluation index obtainment process include, for example, modes of a first example and a second example.

(First Example of Evaluation Index Obtainment Process)

In the machine learning process of the first example, the false alert rate calculation unit 44 may train the category recognition model 31a to convert the appearance image of an item into a category according to a classification result each time the classification result is output from the classification unit 42.

It should be noted that the training data may be generated based on the item information 41a and the classification result (correspondence information). For example, the false alert rate calculation unit 44 may generate training data in which an appearance image included in the item information 41a is used as input data and a converted category, obtained by converting an item name included in the item information 41a into the category based on the correspondence information, is used as the ground truth label. FIG. 9 illustrates an example in which the item information 41a and correspondence information included in the training data are provided from the server 4 to the fraud detection apparatus 3, for the sake of convenience.

In the verification process of the first example, the false alert rate calculation unit 44 may obtain evaluation indexes related to the result of the fraud detection process from the fraud detection apparatus 3 when respective camera images of a plurality of items included in the verification information 31b are input to the trained category recognition model 31a.

In the following description, it is assumed that, in the first example of the evaluation index obtainment process, the fraud detection apparatus 3 calculates evaluation indexes in response to an instruction from the false alert rate calculation unit 44, and the details of the calculation process of the evaluation indexes (indices) in the fraud detection apparatus 3 will be described in the description of the example of the functional configuration of the fraud detection apparatus 3. It should be noted that the calculation of evaluation indexes in the evaluation index obtainment process may be performed by, for example, the server 4 (false alert rate calculation unit 44) using the category recognition model or image recognition model stored in the server 4.

(Second Example of Evaluation Index Obtainment Process)

In the machine learning process of the second example, the false alert rate calculation unit 44 may train an item recognition model to output the item name when an appearance image of each of a plurality of items to be processed is input, based on the item information 41a. The item recognition model may be an image recognition model (machine learning model) different from the category recognition model 31a and may be provided in the server 4. In the second example, the training of the item recognition model for a plurality of items to be processed may be performed once when the category generation process is performed for the first time or may be performed in advance.

In the verification process of the second example, the false alert rate calculation unit 44 may obtain the verification information 31b (see the broken-line arrow in FIG. 9) and calculate evaluation indexes related to the results of the fraud detection process when respective camera images of a plurality of items included in the verification information 31b are input to the trained item recognition model.

For example, the false alert rate calculation unit 44 converts the item name obtained by inputting an camera image of each of the plurality of items included in the verification information 31b to the item recognition model, into a category based on the classification result. Furthermore, the false alert rate calculation unit 44 converts the item name of each of the plurality of items included in the verification information 31b, into a category, based on the classification result.

The false alert rate calculation unit 44 may then calculate the false alert rate E by determining, for each of the plurality of items included in the verification information 31b, whether or not the category obtained by the conversion matches.

The determination unit 45 determines whether or not the calculated undetected fraud-induced loss L and false alert rate E satisfy the given condition, and if the given condition is satisfied, determines that the current classification result is the optimal category information and stores the category information into the correspondence information 41b. The correspondence information 41b is information indicating the category of each of the plurality of items when the given condition is satisfied. The correspondence information 41b may be output from the server 4 to the fraud detection apparatus 3 as training data, together with the item information 41a.

The determination made by the determination unit 45 as to whether or not the undetected fraud-induced loss L and the false alert rate E satisfy the given condition may be based on the decision logic in the above-described optimization process, e.g., the multi-objective optimization process. As one example, the determination unit 45 may determine that the given condition is satisfied if both the undetected fraud-induced loss L and the false alert rate E for a given classification pattern are less than or equal to their respective thresholds, and both the undetected fraud-induced loss L and the false alert rate E are smaller than those of other classification patterns. It should be noted that, after the undetected fraud-induced loss L and false alert rate E for all the classification patterns have been calculated, the determination unit 45 may make the determination by comparing the undetected fraud-induced loss L and false alert rate E of each of all the classification patterns.

Furthermore, for example, when only the condition (a) from among the condition (a) and the condition (b) is included in the given condition, the determination unit 45 may determine whether or not one or more statistical quantities calculated for each category (for example, the undetected fraud-induced loss L, which is the average value thereof) satisfy the given condition. In this case, the function of the false alert rate calculation unit 44 may be omitted from the server 4. Similarly, when only the condition (b) from among the condition (a) and the condition (b) is included in the given condition, the function of the undetected fraud-induced loss calculation unit 43 may be omitted from the server 4.

If the calculated undetected fraud-induced loss L and false alert rate E do not satisfy the given condition, or if there is any undetermined classification pattern, the determination unit 45 instructs the classification unit 42 to change a classification pattern, thereby changing the classification pattern used by the classification unit 42 to classify the items into categories. The undetected fraud-induced loss calculation unit 43 and the false alert rate calculation unit 44 each obtain the classification result corresponding to the changed classification pattern from the classification unit 42 and perform the process of calculating the undetected fraud-induced loss L and the false alert rate E.

(Description of Example of Functional Configuration of Fraud Detection Apparatus 3)

Next, an example of the functional configuration of the fraud detection apparatus 3 will be described with reference to FIG. 9.

The training unit 32 performs training (the machine learning process) of the category recognition model 31a using a plurality of training data pieces input from the server 4. The category recognition model 31a is one example of an image recognition model (machine learning model) trained to recognize categories of items.

The plurality of training data pieces may include, for example, for each of a plurality of items to be processed, information that uniquely identifies the item (e.g., item name), an appearance image of the item, and the category of the item. The item name and the appearance image are information included in the item information 41a and are examples of input data to the category recognition model 31a. The category is a category obtained by converting the item name based on the classification result (correspondence information) or the correspondence information 41b described above and is one example of ground truth data (ground truth label). The plurality of training data pieces for the plurality of items to be processed may be referred to as a training dataset.

The training unit 32 inputs an appearance image included in the training data into the category recognition model 31a, for example, and obtains the category output from the category recognition model 31a according to the input of the training data. Then, the training unit 32 updates (optimizes) the parameters of the category recognition model 31a so that the category obtained from the category recognition model 31a matches the category (ground truth data) included in the training data (i.e., so that the error is minimized) .

The training unit 32 trains the category recognition model 31a by performing the above-described process for each of the plurality of training data pieces in the machine learning process in the first example of the evaluation index obtainment process, or in the machine learning process performed after the completion of the category generation process in the server 4. As the method for determining whether the machine learning process for the category recognition model 31a is completed, various known methods may be adopted.

The inference unit 33 (category recognition unit 30), the determination unit 34, and the output unit 35 perform the verification process (calculation of evaluation index) in the first example of the evaluation index obtainment process, in response to an instruction from the false alert rate calculation unit 44 of the server 4.

The verification information 31b may include a plurality of verification data pieces used for the verification process. The plurality of verification data pieces may include, for example, for each of the plurality of items to be verified, information for uniquely identifying the item (e.g., item name) and an appearance image of the item.

In the following description, the appearance image included in the verification information 31b is an image of an item captured by an imaging device, such as the camera 2, or an image that has been processed based on that image, and may be referred to as a "camera image".

Furthermore, the inference unit 33 (category recognition unit 30), the determination unit 34, and the output unit 35 perform a fraud detection process during the operation phase of the fraud detection apparatus 3. The fraud detection process is a process for detecting fraudulent behaviors using the image information 31c and the scan result input from the POS device 5.

The image information 31c may include a plurality of appearance images of items, for example, a plurality of camera images. The plurality of camera images included in the image information 31c are examples of a plurality of captured images obtained by capturing a plurality of items subject to fraud detection. It should be noted that each of the plurality of camera images included in the image information 31c may be an image that has been processed based on a captured image.

The inference unit 33 (category recognition unit 30) performs an inference process using the trained category recognition model 31a that has been trained by the training unit 32.

For example, in the verification process, the inference unit 33 may input a camera image included in the verification information 31b to the category recognition model 31a and obtain the category output from the category recognition model 31a. Furthermore, for example, in the fraud detection process, the inference unit 33 may input a camera image included in the image information 31c to the category recognition model 31a and obtain the category output from the category recognition model 31a. The inference unit 33 may output the category obtained from the category recognition model 31a, to the determination unit 34.

The determination unit 34 obtains the category by converting the input item name. The determination unit 34 then compares the category determined through the conversion and the category input from the inference unit 33, and outputs a result (comparison result) indicating whether or not they match, to the output unit 35. The result may include at least one type of information among the categories compared, the camera images, and the item name input from the POS device 5.

In the process of conversion to a category, the determination unit 34 may perform, for example, the following processing. In the verification process, for example, the determination unit 34 may convert an item name included in the verification information 31b into a category based on the correspondence relationship between the item name and the category input from the false alert rate calculation unit 44. Furthermore, for example, in the fraud detection process, the determination unit 34 may convert an item name included in the scan result input from the POS device 5 into a category based on the correspondence relationship between the item name and the category (optimal category) included in the correspondence information 41b.

Based on the result of the determination input from the determination unit 34, the output unit 35 outputs an evaluation index, e.g., the accuracy or false positive rate, to the false alert rate calculation unit 44 in the verification process, or outputs an alert to the POS device 5 in the fraud detection process. The alert is one example of information indicating that a fraudulent behavior has been detected regarding the scan result. The output unit 35 may output the alert to a terminal device used by employees of the store (retailer), e.g., a Personal Computer (PC), smartphone, or tablet terminal.

(C) Example of Operation in One Embodiment

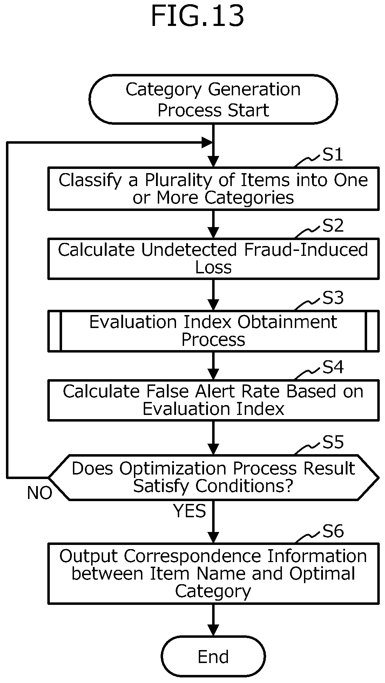

Next, examples of the operations of the system 1 according to one embodiment will be described with reference to FIGS. 13 to 17.

(C-1) Example of Operation of Category Generation Process

FIG. 13 is a flowchart for explaining an example of the operation of the category generation process. As exemplified in FIG. 13, the classification unit 42 of the server 4 classifies a plurality of items into one or more categories based on the item information 41a (Step S1).

The undetected fraud-induced loss calculation unit 43 calculates the undetected fraud-induced loss L based on the item information 41a and the classification result (Step S2).

The false alert rate calculation unit 44 performs the evaluation index obtainment process (Step S3), and calculates the false alert rate E based on the obtained evaluation index (Step S4). It should be noted that the process of Step S2 and the processes of Steps S3 and S4 may be executed in reverse order, or at least partially executed in parallel.

The determination unit 45 determines whether or not the optimization process result including the undetected fraud-induced loss L and the false alert rate E satisfies the given condition (Step S5). If the optimization process result does not satisfy the given condition (NO in Step S5), the process proceeds to Step S1, and the classification unit 42 outputs a classification result based on another classification pattern.

If the optimization process result satisfies the given condition (YES in Step S5), the determination unit 45 outputs the current classification result by the classification unit 42, as the correspondence information 41b between the item names and the optimal categories (Step S6), and the process ends.

(C-2) Example of Operation of Evaluation Index Obtainment Process

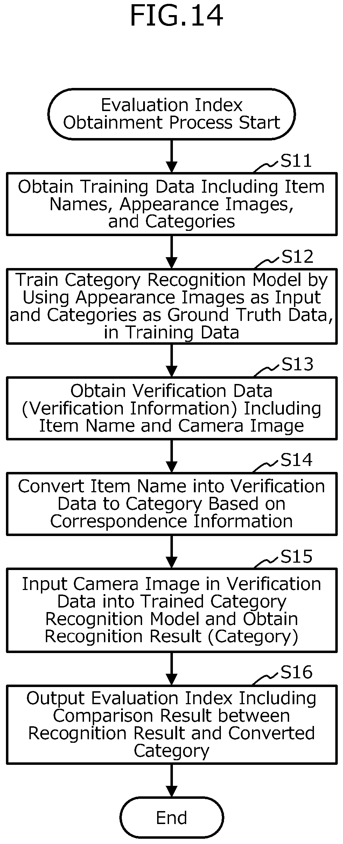

FIG. 14 is a flowchart for explaining the operation of a first example of the evaluation index obtainment process. As exemplified in FIG. 14, in the first example of the evaluation index obtainment process illustrated in Step S3 of FIG. 13, the false alert rate calculation unit 44 of the server 4 obtains training data including item names and appearance images, as well as categories (Step S11). It should be noted that the categories may be obtained by converting the item names included in the item information 41a based on the correspondence information (classification result). The false alert rate calculation unit 44 may output the training data to the fraud detection apparatus 3 to cause the fraud detection apparatus 3 to calculate evaluation indexes.

The training unit 32 of the fraud detection apparatus 3 trains the category recognition model 31a using the appearance images in the training data as the input and the categories as ground truth labels (Step S12).

The inference unit 33 obtains verification data (verification information 31b) including an item name and a camera image (Step S13).

The inference unit 33 converts the item name in the verification data into the category based on the correspondence information (Step S14). The inference unit 33 then inputs the camera image in the verification data into the trained category recognition model 31a to obtain the category as the recognition result (Step S15).

The determination unit 34 compares the recognition result with the converted category, and outputs an evaluation index including the comparison result to the false alert rate calculation unit 44 (Step S16), and the process ends.

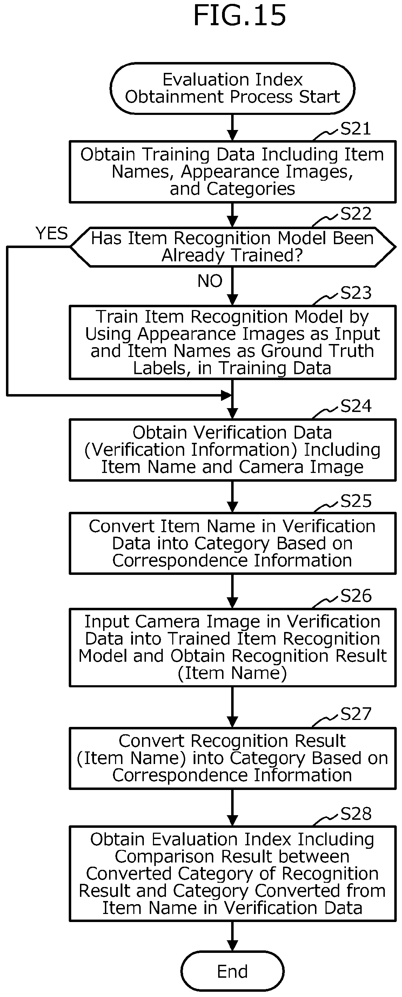

FIG. 15 is a flowchart for explaining the operation of a second example of the evaluation index obtainment process. As exemplified in FIG. 15, in the second example of the evaluation index obtainment process illustrated in Step S3 of FIG. 13, the false alert rate calculation unit 44 of the server 4 obtains training data including item names and appearance images, as well as categories (Step S21).

The false alert rate calculation unit 44 determines whether or not the item recognition model has already been trained (Step S22), and if the model has been trained (YES in Step S22), the process proceeds to Step S24. If the model has not been trained (NO in Step S22), the false alert rate calculation unit 44 trains the item recognition model using the appearance images in the training data as the inputs and the item names in the training data as ground truth labels (Step S23).

The false alert rate calculation unit 44 obtains verification data (verification information 31b) including an item name and a camera image (Step S24).

The false alert rate calculation unit 44 converts the item name in the verification data into the category based on the correspondence information (Step S25). The false alert rate calculation unit 44 then inputs the camera image in the verification data into the trained item recognition model to obtain item name as a recognition result (Step S26).

The false alert rate calculation unit 44 converts the recognition result into the category based on the correspondence information (Step S27). The false alert rate calculation unit 44 then compares the converted category from the recognition result with the category converted from the item name in the verification data, and obtains an evaluation index including the comparison result (Step S28), and the process ends.

(C-3) Example of Operation of Machine Learning Process

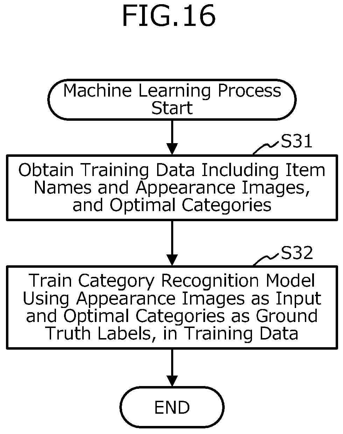

FIG. 16 is a flowchart for explaining an example of the operation of the machine learning process. As exemplified in FIG. 16, the training unit 32 of the fraud detection apparatus 3 obtains training data including item names and appearance images, as well as optimal categories, from the server 4 (Step S31). The optimal categories may be obtained by converting the item names included in the item information 41a based on the correspondence information 41b.

The training unit 32 trains the category recognition model 31a using the appearance images in the training data as the input and the optimal categories as ground truth labels (Step S32), and the process ends.

(C-4) Example of Operation of Fraud Detection Process

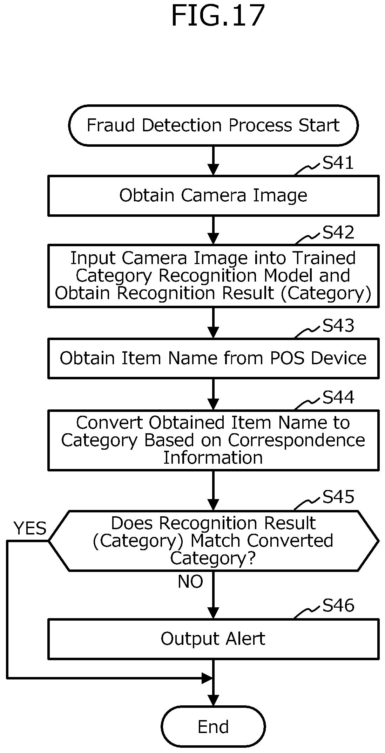

FIG. 17 is a flowchart for explaining an example of the operation of the fraud detection process. As exemplified in FIG. 17, the fraud detection apparatus 3 obtains a camera image from the camera 2 (Step S41), and stores the camera image in the image information 31c.

The inference unit 33 inputs the camera image included in the image information 31c into the trained category recognition model 31a, obtains a category as a recognition result (Step S42), and outputs the recognition result to the determination unit 34.

The determination unit 34 obtains a scan result including the item name of a scanned item from the POS device 5 (Step S43), and converts the obtained item name into a category based on the correspondence relationship between the item name and category (optimal category) included in the correspondence information 41b (Step S44).

The determination unit 34 determines whether or not the recognition result and the converted category match by comparing them (Step S45), and outputs the determination result to the output unit 35.

If the determination result indicates that they match (YES in Step S45), the process ends. It should be noted that, in this case, the output unit 35 may notify the POS device 5 of information indicating that no fraudulent behavior has been detected.

On the other hand, if the determination result indicates a mismatch between them (NO in Step S45), the output unit 35 outputs an alert to the POS device 5 (Step S46), and the process ends.

(D) Examples of Application

Next, an application example of the system 1 according to one embodiment will be described using a fraud detection process for each of label switching and a banana trick as examples.

(D-1) First Example of Fraud Detection Process

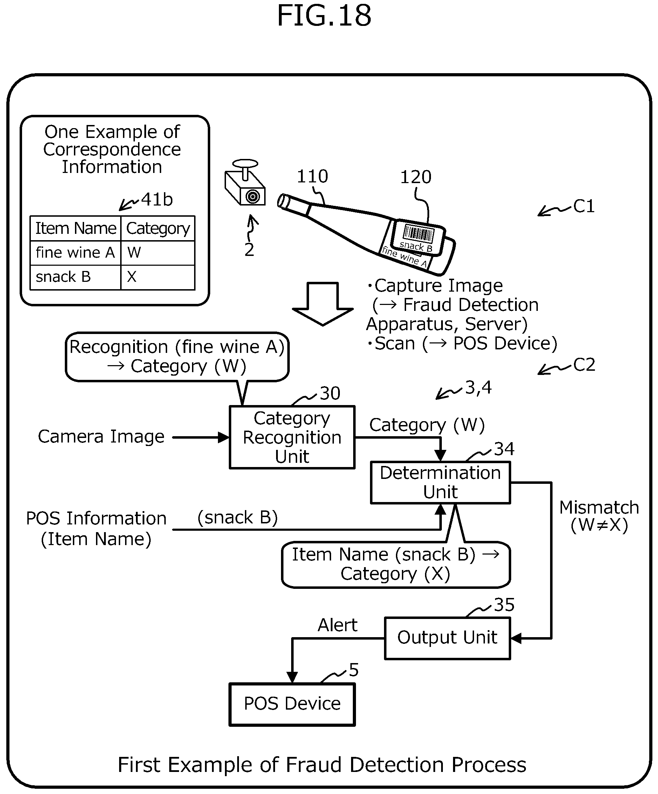

FIG. 18 is a diagram for explaining a first example of the fraud detection process. As exemplified in FIG. 18, the correspondence information 41b includes {fine wine A (fine wine 110), W} and {snack B (the snack 120), X} as {item name, category}. As indicated by the arrow C1, it is assumed that the label of a snack 120 is captured by the camera 2 while the label of a bottle of fine wine 110 is concealed by the snack 120, and the label of the snack 120 is scanned by the POS device 5.

In this case, as indicated by the arrow C2, in response to the camera image being input, the category recognition unit 30 outputs the category W corresponding to the fine wine 110 to the determination unit 34. On the other hand, the determination unit 34 receives the item name of the snack 120 as a scan result from the POS device 5. The determination unit 34 converts the item name of the snack 120 into the category X based on the correspondence information 41b. The determination unit 34 compares the category W and the category X, and outputs a comparison result indicating a mismatch to the output unit 35. The output unit 35 outputs an alert to the POS device 5 based on the comparison result.

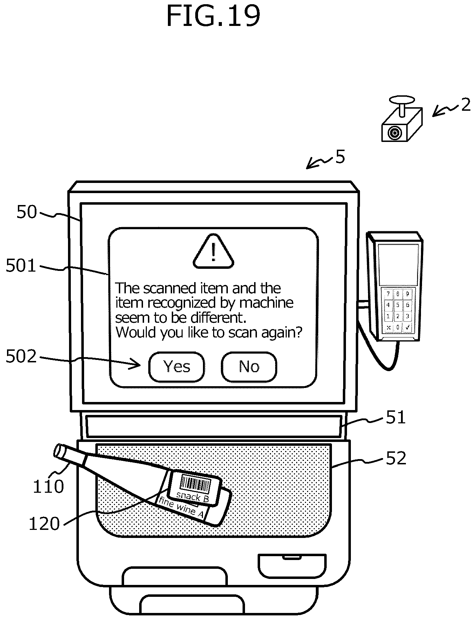

FIG. 19 is a diagram illustrating an example of an output of an alert in the first example of the fraud detection process. The POS device 5 may include an operation screen 50, such as a touch panel, and a fixed scanner device 51. When the snack 120 is presented in the scan area 52, which is the scanning range of the scanner device 51, so as to cover the label of the bottle of fine wine 110, an alert 501 is displayed on the operation screen 50.

The alert 501 may include, for example, a message indicating a mismatch between the scanned item and the item recognized through image recognition, and a message prompting a re-scan. In addition, the alert 501 may display buttons 502 allowing the customer to select whether or not to perform a re-scan. If "No" is selected on the buttons 502, the POS device 5 may output various notifications for calling an employee, that is, may "issue an alert". On the other hand, if "Yes" is selected on the buttons 502, the POS device 5 cancels the registration of the snack 120 for which the alert 501 was issued (or deducts the price of the snack 120 from the total amount of items already registered), and may resume processing for registering an item.

In this manner, according to the method of one embodiment, fraudulent behaviors, such as those by label switching, can be detected. Even when normal registration of an item fails due to an erroneous operation or the like by the customer, such a behavior (fraudulent behavior) can still be detected.

(D-2) Second Example of Fraud Detection Process

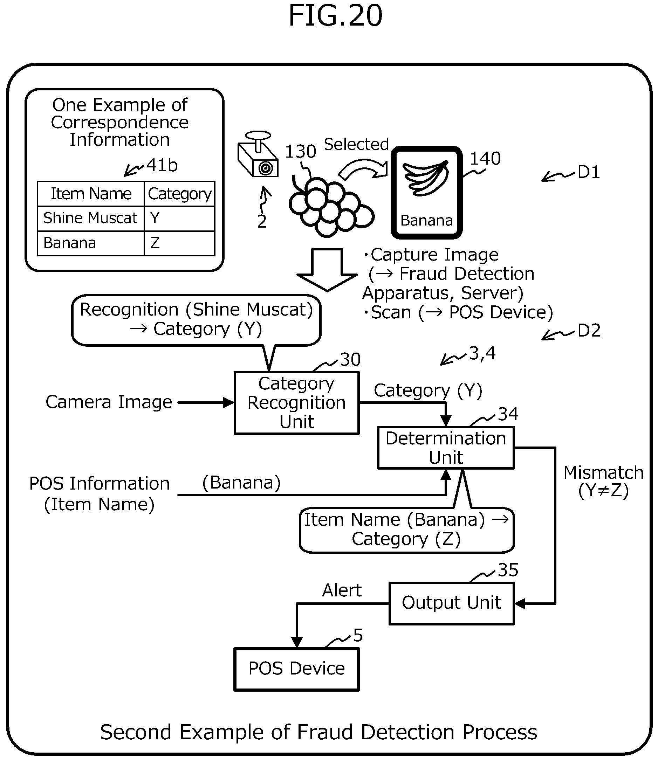

FIG. 20 is a diagram for explaining a second example of the fraud detection process. As exemplified in FIG. 20, the correspondence information 41b includes {Shine Muscat 130, Y} and {banana 140, Z} as {item name, category}. As indicated by the arrow D1, it is assumed that a bunch of Shine Muscat 130 without a label is captured by the camera 2, and a bunch of bananas 140 is registered (selected, see the screen 102 in FIG. 2) in the POS device 5, in place of the Shine Muscat 130.

In this case, as indicated by the arrow D2, in response to the camera image being input, the category recognition unit 30 outputs the category Y corresponding to the Shine Muscat 130 to the determination unit 34. On the other hand, the item name of the bananas 140 is input into the determination unit 34 as a scan result (selection result) from the POS device 5. The determination unit 34 converts the item name of the bananas 140 into the category Z based on the correspondence information 41b. The determination unit 34 compares the category Y and the category Z, and outputs a comparison result indicating a mismatch to the output unit 35. The output unit 35 outputs an alert to the POS device 5 based on the comparison result.

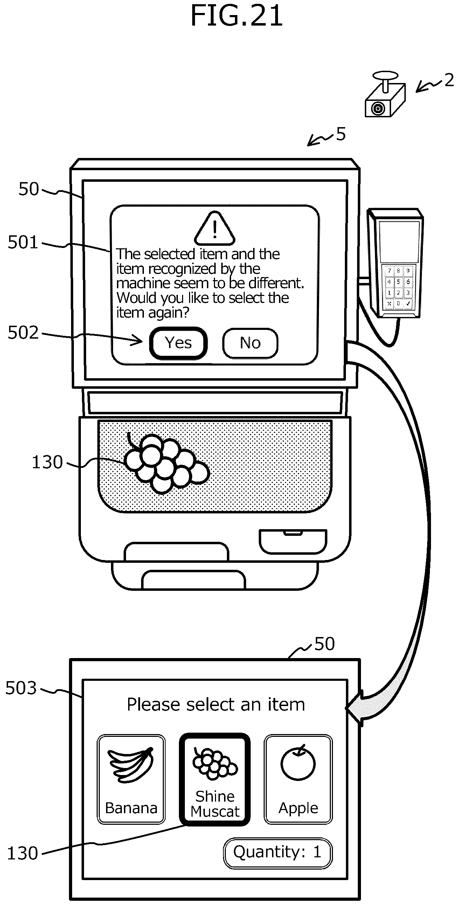

FIG. 21 is a diagram illustrating an example of an output of an alert in the second example of the fraud detection process. When the bananas 140 are registered in the POS device 5 in place of the Shine Muscat 130, the alert 501 is displayed on the operation screen 50.

If "Yes" is selected on the buttons 502 of the alert 501, the POS device 5 cancels the registration of the bananas 140 for which the alert 501 was issued (or deducts the price of the bananas 140 from the total amount of items already registered). In this case, the POS device 5 may display a screen 503 for registering the correct item on the operation screen 50, for example. As a result, the customer can correctly select the Shine Muscat 130 on the screen 503.

In this manner, according to the method of one embodiment, fraudulent behaviors by the banana trick can be detected. Even when normal registration of an item fails due to an erroneous operation or the like by the customer, such a behavior (fraudulent behavior) can still be detected.

As described above, according to the server 4 of one embodiment, it is possible to generate artificial categories that satisfy the given condition based on objective criteria. For example, the server 4 defines the given condition as an objective function, and generates categories that optimally satisfy the condition by optimizing the objective function. As a result, when the given condition includes the condition (a) and the condition (b), for example, it is possible to generate item categories that reduce false alerts and minimize the loss when fraudulent behaviors are overlooked.

In addition, according to the fraud detection apparatus 3 including the category recognition model 31a trained based on the generated categories, the fraud detection process can be performed such that false alerts are reduced and the loss when fraudulent behaviors are overlooked is minimized.

Furthermore, since the categories are determined based on the given condition, it is possible to generate pseudo (artificial) categories that are difficult for humans to understand. As a result, for example, even if a malicious customer attempts to register an item of the same category (e.g., daily necessities) as the item to be fraudulently obtained by label switching or a banana trick, the fraud detection process can appropriately detect the fraudulent behavior.

(E) Miscellaneous

The technology according to one embodiment described above may be modified or changed as follows.

For example, the classification unit 42, the undetected fraud-induced loss calculation unit 43, the false alert rate calculation unit 44, and the determination unit 45 provided in the server 4 illustrated in FIG. 9 may be combined in any combination, or may each be divided. In addition, the training unit 32, the inference unit 33, the determination unit 34, and the determination unit 45 provided in the fraud detection apparatus 3 illustrated in FIG. 9 may be combined in any combination, or may each be divided. Furthermore, the fraud detection apparatus 3 may be integrated with the server 4 (see FIG. 7) or may be integrated with the POS device 5. When the fraud detection apparatus 3 is integrated with the POS device 5, the functional configuration of the fraud detection apparatus 3 illustrated in FIG. 9 may be provided in the POS device 5.

Furthermore, although the output unit 35 has been described as sending a message as an alert to the POS device 5, this is not limiting. Alternatively or additionally to the message, the alert may be a voice or buzzer sound that prompts the customer to re-register the item for which a fraudulent behavior has been detected. In addition, the message is not limited to a phrase prompting the customer to re-register the item, but may be a phrase indicating that the registration has been failed (in other words, a screen prompting the customer to re-register the item), or a phrase suggesting to the customer to call a store employee, for example. Furthermore, the alert may include a command (control information) instructing the POS device 5 to temporarily stop the function of the item registration and/or settlement process.

Moreover, for example, one or both of the server 4 and the fraud detection apparatus 3 illustrated in FIG. 9 may be configured such that a plurality of devices embody the processing functions by cooperating with each other via a network. As one example, the classification unit 42, the undetected fraud-induced loss calculation unit 43, the false alert rate calculation unit 44, and the determination unit 45 of the server 4 may be embodied by an application server or a Web server, and the storage area storing the item information 41a and the correspondence information 41b may be embodied by a Database (DB) server. In addition, the training unit 32, the inference unit 33, the determination unit 34, and the output unit 35 of the fraud detection apparatus 3 may be embodied by an application server or a Web server, and the storage area storing the category recognition model 31a, the verification information 31b, and the image information 31c may be embodied by a database (DB) server. In these cases, the Web server, application server, and DB server may embody the processing functions of one or both of the server 4 and the fraud detection apparatus 3 by cooperating with each other via a network.

[Reference Signs List]

| | |
|---|---|
| 1 | System |
| 10 | Computer |
| 2 | Camera |
| 3 | Fraud detection apparatus |
| 30 | Category recognition unit |
| 31a | Category recognition model |
| 31b | Verification information |
| 31c | Image information |
| 32 | Training unit |
| 33 | Inference unit |
| 34 | Determination unit |
| 35 | Output unit |

| 36, 46 | Controller |
| 4 | Server |
| 41a | Item information |
| 41b | Correspondence information |
| 42 | Classification unit |
| 43 | Undetected fraud-induced loss calculation unit |
| 44 | False alert rate calculation unit |
| 45 | Determination unit |
| 5 | POS device |
| 50 | Operation screen |
| 51 | Scanner device |

**Claims**

1. An information processing program that causes a computer to perform a process comprising:

   classifying a plurality of items to be determined into one or more categories based on a plurality of appearance images of the plurality of items, the plurality of appearance images being stored in a storage area (41a) in association with corresponding prices of the plurality of items;
   calculating, for each of the one or more categories into which the items are classified, a statistical value of prices of a plurality of items in the category, based on the plurality of prices stored in the storage area (41a);
   changing a pattern for the classifying and performing the classifying and the calculating so that one or more of the statistical values satisfy a given condition; and
   outputting category information (41b) indicating a category of each of the plurality of items when the given condition is satisfied.

2. The information processing program according to claim 1, wherein the process further comprises:

   calculating a false alert rate of a machine learning model (31a) when the machine learning model (31a) is trained based on the one or more classified categories, the machine learning model (31a) outputting a category of the item to be determined based on a captured image of the item to be determined; and
   changing the pattern for the classifying and performing the classifying and the calculating so that the one or more of the statistical values and the false alert rate satisfy the given condition.

3. The information processing program according to claim 2, wherein
   the changing the pattern for the classifying and the performing of the classifying and the calculating comprise a multi-objective optimization process that optimizes an objective function related to the one or more of the statistical values and an objective function related to the false alert rate.

4. The information processing program according to any one of claims 1 to 3, wherein
   the classifying comprises:

   obtaining an image feature of each of the plurality of appearance images stored in the storage area (41a); and
   clustering the plurality of appearance images based on a similarity of the image features.

5. The information processing program according to any one of claims 1 to 4, wherein

   the outputting of the category information (41b) comprises outputting, as training data for a machine learning model (31a) that outputs a category of the item to be determined based on a captured image of the item to be determined, each of the plurality of appearance images stored in the storage area (41a) and a category of each of the plurality of items indicated by the category information (41b), and
   the process further comprises executing a machine learning process of the machine learning model (31a) using the training data.

6. The information processing program according to claim 5, wherein the process further comprises:

   obtaining a category of an item registered in a self-checkout apparatus based on the category information (41b);
   determining whether or not a category obtained by inputting a captured image of the item to be determined into the trained machine learning model (31a) matches the category of the registered item; and
outputting an alert to the self-checkout apparatus when the category obtained by the inputting does not match the category of the registered item.

7. An information processing apparatus comprising a controller, the controller being configured to execute a process comprising:

classifying a plurality of items to be determined into one or more categories based on a plurality of appearance images of the plurality of items, the plurality of appearance images being stored in a storage area (41a) in association with corresponding prices of the plurality of items;
calculating, for each of the one or more categories into which the items are classified, a statistical value of prices of a plurality of items in the category, based on the plurality of prices stored in the storage area (41a);
changing a pattern for the classifying and performing the classifying and the calculating so that one or more of the statistical values satisfy a given condition; and
outputting category information (41b) indicating a category of each of the plurality of items when the given condition is satisfied.

8. The information processing apparatus according to claim 7, wherein
the process further comprising:

calculating a false alert rate of a machine learning model (31a) when the machine learning model (31a) is trained based on the one or more classified categories, the machine learning model (31a) outputting a category of the item to be determined based on a captured image of the item to be determined; and
changing the pattern for the classifying and performing the classifying and the calculating so that the one or more of the statistical values and the false alert rate satisfy the given condition.

9. The information processing apparatus according to claim 8, wherein,
the changing of the pattern for the classifying and the performing of the classifying and the calculating comprise a multi-objective optimization process that optimizes an objective function related to the one or more of the statistical values and an objective function related to the false alert rate.

10. The information processing apparatus according to any one of claims 7 to 9, wherein
the classifying comprises:

obtaining an image feature of each of the plurality of appearance images stored in the storage area (41a); and
clustering the plurality of appearance images based on a similarity of the image features.

11. The information processing apparatus according to any one of claims 7 to 10, wherein

the outputting of the category information (41b) comprises outputting, as training data for a machine learning model (31a) that outputs a category of the item to be determined based on a captured image of the item to be determined, each of the plurality of appearance images stored in the storage area (41a) and a category of each of the plurality of items indicated by the category information (41b); and
the process further comprises executing a machine learning process of the machine learning model (31a) using the training data.

12. The information processing apparatus according to claim 11, wherein
the process further comprises:

obtaining a category of an item registered in a self-checkout apparatus based on the category information (41b) ;
determining whether or not a category obtained by inputting a captured image of the item to be determined into the trained machine learning model (31a) matches the category of the registered item; and
outputting an alert to the self-checkout apparatus when the category obtained by the inputting does not match the category of the registered item.

13. An information processing system comprising:

a self-checkout apparatus;

a fraud detection apparatus configured to perform fraud detection in the self-checkout apparatus using an image recognition model; and
a controller, the controller configured to execute a process comprising:

classifying a plurality of items to be determined into one or more categories based on a plurality of appearance images of the plurality of items, the plurality of appearance images being stored in a storage area (41a) in association with corresponding prices of the plurality of items;
calculating, for each of the one or more categories into which the items are classified, a statistical value of prices of a plurality of items in the category, based on the plurality of prices stored in the storage area (41a);
changing a pattern for the classifying and performing the classifying and the calculating so that one or more of the statistical values satisfy a given condition; and
outputting category information (41b) indicating a category of each of the plurality of items when the given condition is satisfied, and

the fraud detection apparatus is configured to perform the fraud detection by the image recognition model trained using the category information (41b).

14. The information processing system according to claim 13, wherein
the process further comprises:

calculating a false alert rate of a machine learning model (31a) when the machine learning model (31a) is trained based on the one or more classified categories, the machine learning model (31a) outputting a category of the item to be determined based on a captured image of the item to be determined; and
changing the pattern for the classifying and performing the classifying and the calculating so that the one or more of the statistical values and the false alert rate satisfy the given condition.

15. The information processing system according to claim 14, wherein
the changing of the pattern for the classifying and the performing of the classifying and the calculating comprises a multi-objective optimization process that optimizes an objective function related to the one or more of the statistical values and an objective function related to the false alert rate.

# FIG.1

One Example of Label Switching

# FIG.2

One Example of Banana Trick

# FIG.3

# FIG.4

Example of Category:
Daily Necessities

# FIG.5

Example of Definition of Categories
Based on Appearances (Shapes)

Beer　　Bleach　　Cleaning
Brush　　Laundry
Detergent

Box?　　Bottle?　　Indescribable
Shapes

# FIG.6

```
                  ~2                    ~1
    ┌─────────────────┐
    │                 │
    │     Camera      │
    │                 │
    └─────────────────┘
             │
             │        ~3
    ┌─────────────────┐          ~5
    │     Fraud       │   ┌──────────────────┐
    │   Detection     │───│   POS Device     │
    │   Apparatus     │   │                  │
    └─────────────────┘   └──────────────────┘
             │
             │        ~4
    ┌─────────────────┐
    │                 │
    │     Server      │
    │                 │
    └─────────────────┘
```

# FIG.7

```
        ∼2
┌─────────────────┐
│                 │
│     Camera      │
│                 │          ↙∼1
│                 │
└────────┬────────┘
        ∼4                    ∼5
┌─────────────────┐   ┌─────────────────┐
│     Server      │   │                 │
│    (Fraud       │   │   POS Device    │
│   Detection     ├───┤                 │
│  Apparatus)     │   │                 │
└─────────────────┘   └─────────────────┘
```

# FIG.8

# FIG.9

1:System

4:Server

Fraud Detection Apparatus

30:Category Recognition Unit

36:Controller

- 43 Undetected Fraud-Induced Loss Calculation Unit
- 42 Classifying Unit
- 44 False Alert Rate Calculation Unit
- 45 Determination Unit
- 46:Controller
- 41a Item Information
- 41b Correspondence Information

Item Name, Appearance Image

Item Name, Category

Evaluation Index

Item Name, Optimal Category

- 32 Training Unit
- 31a Category Recognition Model
- 31c Image Information
- 33 Inference Unit
- 31b Verification Information
- 34 Determination Unit
- 35 Output Unit

Category

Camera Image

Item Name

Scan Result (Item Name)

Result

Alert

- 2 Camera
- 5 POS Device

# FIG.10

One Example of Clustering in Image Feature Space

# FIG.11

One Example of Relationship among Number of
Categories, Undetected Fraud-Induced Loss,
and False Alert Rates

# FIG.12

Examples of Item Information

~41a

| Item Name | Appearance Image | Price |
|-----------|------------------|-------|
| fine wine A | | ¥w |
| snack B | | ¥x |
| Shine Muscat | | ¥y |
| Banana | | ¥z |

# FIG.13

```
        ┌──────────────────────────┐
        │   Category Generation     │
        │     Process Start         │
        └──────────────────────────┘
                     │
                     ▼            S1
        ┌──────────────────────────┐
        │ Classify a Plurality of Items into One │
        │      or More Categories    │
        └──────────────────────────┘
                     │            S2
                     ▼
        ┌──────────────────────────┐
        │ Calculate Undetected Fraud-Induced │
        │           Loss            │
        └──────────────────────────┘
                     │            S3
                     ▼
        ┌──────────────────────────┐
        ║ Evaluation Index Obtainment │
        ║          Process          ║
        └──────────────────────────┘
                     │            S4
                     ▼
        ┌──────────────────────────┐
        │ Calculate False Alert Rate Based on │
        │       Evaluation Index     │
        └──────────────────────────┘
                     │            S5
                     ▼
        ╱──────────────────────────╲
       ⟨ Does Optimization Process Result ⟩
   NO   ╲    Satisfy Conditions?        ╱
                    YES
                     │            S6
                     ▼
        ┌──────────────────────────┐
        │ Output Correspondence Information │
        │  between Item Name and Optimal │
        │          Category          │
        └──────────────────────────┘
                     │
                     ▼
             ┌──────────────┐
             │     End       │
             └──────────────┘
```

# FIG.14

```
       ╭─────────────────────────╮
       │    Evaluation Index      │
       │ Obtainment Process Start │
       ╰─────────────────────────╯
                    │
                    ▼            ⟋S11
   ┌─────────────────────────────────┐
   │ Obtain Training Data Including Item │
   │     Names, Appearance Images,    │
   │          and Categories          │
   └─────────────────────────────────┘
                    │
                    ▼            ⟋S12
   ┌─────────────────────────────────┐
   │ Train Category Recognition Model by │
   │  Using Appearance Images as Input │
   │ and Categories as Ground Truth Data, │
   │          in Training Data        │
   └─────────────────────────────────┘
                    │
                    ▼            ⟋S13
   ┌─────────────────────────────────┐
   │     Obtain Verification Data     │
   │ (Verification Information) Including │
   │    Item Name and Camera Image    │
   └─────────────────────────────────┘
                    │
                    ▼            ⟋S14
   ┌─────────────────────────────────┐
   │ Convert Item Name into Verification │
   │    Data to Category Based on     │
   │     Correspondence Information    │
   └─────────────────────────────────┘
                    │
                    ▼            ⟋S15
   ┌─────────────────────────────────┐
   │ Input Camera Image in Verification │
   │     Data into Trained Category   │
   │    Recognition Model and Obtain  │
   │     Recognition Result (Category) │
   └─────────────────────────────────┘
                    │
                    ▼            ⟋S16
   ┌─────────────────────────────────┐
   │ Output Evaluation Index Including │
   │      Comparison Result between   │
   │  Recognition Result and Converted │
   │             Category             │
   └─────────────────────────────────┘
                    │
                    ▼
              ╭──────────╮
              │   End    │
              ╰──────────╯
```

# FIG.15

Evaluation Index
Obtainment Process Start

~S21

Obtain Training Data Including Item
Names, Appearance Images,
and Categories

~S22

YES — Has Item Recognition Model Been
Already Trained?

NO

~S23

Train Item Recognition Model by
Using Appearance Images as Input
and Item Names as Ground Truth
Labels, in Training Data

~S24

Obtain Verification Data
(Verification Information) Including
Item Name and Camera Image

~S25

Convert Item Name in Verification
Data into Category Based on
Correspondence Information

~S26

Input Camera Image in Verification
Data into Trained Item Recognition
Model and Obtain Recognition Result
(Item Name)

~S27

Convert Recognition Result
(Item Name) into Category Based on
Correspondence Information

~S28

Obtain Evaluation Index Including
Comparison Result between
Converted Category of Recognition
Result and Category Converted from
Item Name in Verification Data

End

# FIG.16

```
┌─────────────────────────┐
│  Machine Learning Process│
│           Start          │
└─────────────────────────┘
             │
             ▼              ~S31
┌─────────────────────────┐
│ Obtain Training Data     │
│ Including Item Names and │
│ Appearance Images,       │
│ and Optimal Categories   │
└─────────────────────────┘
             │
             ▼              ~S32
┌─────────────────────────┐
│ Train Category Recognition│
│ Model Using Appearance   │
│ Images as Input and      │
│ Optimal Categories as    │
│ Ground Truth Labels, in  │
│ Training Data            │
└─────────────────────────┘
             │
             ▼
        ┌─────────┐
        │   END   │
        └─────────┘
```

# FIG.17

```
        ( Fraud Detection Process Start )
                        |
                        |  S41
        +-------------------------------+
        |      Obtain Camera Image      |
        +-------------------------------+
                        |
                        |  S42
        +-------------------------------+
        |  Input Camera Image into      |
        |  Trained Category Recognition |
        |  Model and Obtain Recognition |
        |      Result (Category)        |
        +-------------------------------+
                        |
                        |  S43
        +-------------------------------+
        |  Obtain Item Name from POS    |
        |          Device               |
        +-------------------------------+
                        |
                        |  S44
        +-------------------------------+
        |  Convert Obtained Item Name   |
        |  to Category Based on         |
        |  Correspondence Information   |
        +-------------------------------+
                        |
                        |  S45
   YES  < Does Recognition Result        >
  <-----< (Category) Match Converted     >
  |      <        Category?               >
  |                     | NO
  |                     |  S46
  |      +-------------------------------+
  |      |        Output Alert           |
  |      +-------------------------------+
  |                     |
  +---------------------+
                        |
                    ( End )
```

# FIG.18

One Example of
Correspondence
Information

41b

| Item Name | Category |
|-----------|----------|
| fine wine A | W |
| snack B | X |

110    120

~C1

2

·Capture Image
(→ Fraud Detection
Apparatus, Server)
·Scan (→ POS Device)

~C2

Recognition (fine wine A)
→ Category (W)

~3,4

~30

Camera Image → Category Recognition Unit → Category (W)

~34

Determination Unit

Mismatch
(W≠X)

POS Information (snack B)
(Item Name)

Item Name (snack B) →
Category (X)

~35

Alert    Output Unit

~5

POS Device

First Example of Fraud Detection Process

# FIG.19

The scanned item and the
item recognized by machine
seem to be different.
Would you like to scan again?

Yes        No

snack B

fine wine A

# FIG.20

One Example of Correspondence Information
~41b

| Item Name | Category |
|-----------|----------|
| Shine Muscat | Y |
| Banana | Z |

130 Selected

140 ~D1

Banana

·Capture Image
(→ Fraud Detection Apparatus, Server)
·Scan (→ POS Device)
~D2

Recognition (Shine Muscat) → Category (Y)

~3,4

Camera Image → Category Recognition Unit ~30

Category (Y)

Determination Unit ~34

Mismatch (Y≠Z)

POS Information (Item Name) (Banana)

Item Name (Banana) → Category (Z)

Alert  Output Unit ~35

POS Device ~5

Second Example of Fraud Detection Process

# FIG.21

50

501 ⚠
The selected item and the
item recognized by the
machine seem to be different.
Would you like to select the
item again?

502 → Yes   No

130

50

503   Please select an item

Banana   Shine Muscat   Apple

130   Quantity: 1

## EUROPEAN SEARCH REPORT

**Application Number**

EP 25 20 3592

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2024/211917 A1 (YAMAMOTO TAKUMA [JP] ET AL) 27 June 2024 (2024-06-27) * abstract; figures * * paragraphs [0034] - [0123] * ----- | 1-15 | INV. G07G1/00 G07G3/00 G06Q20/20 G06N20/00 G06V20/52 |
| X | US 2023/186601 A1 (HARTLEY TIMOTHY DAVID [GB] ET AL) 15 June 2023 (2023-06-15) * abstract; figures * * paragraphs [0032] - [0069], [0109] * ----- | 1-15 | |
| X | US 2022/138784 A1 (LASERSON ITAMAR DAVID [IL] ET AL) 5 May 2022 (2022-05-05) * abstract; figures * * paragraphs [0015] - [0032] * ----- | 1-15 | |
| A | US 2023/342747 A1 (SHEVTSOV EVGENY [US] ET AL) 26 October 2023 (2023-10-26) * abstract; figures * * paragraphs [0032] - [0042], [0078] * ----- | 1-15 | |
| A | OUCHEIKH RACHID ET AL: "Product verification using OCR classification and Mondrian conformal prediction", EXPERT SYSTEMS WITH APPLICATIONS, ELSEVIER, AMSTERDAM, NL, vol. 188, 30 September 2021 (2021-09-30), XP086845700, ISSN: 0957-4174, DOI: 10.1016/J.ESWA.2021.115942 [retrieved on 2021-09-30] * section 6 and sub-sections * ----- | 1-15 | TECHNICAL FIELDS SEARCHED (IPC) G06Q G06F G06E G06N G06V G07G |

The present search report has been drawn up for all claims

| Place of search | Date of completion of the search | Examiner |
|---|---|---|
| The Hague | 11 February 2026 | Schöndienst, Thilo |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 25 20 3592

This annex lists the patent family members relating to the patent documents cited in the above-mentioned European search report.
The members are as contained in the European Patent Office EDP file on
The European Patent Office is in no way liable for these particulars which are merely given for the purpose of information.

11-02-2026

| Patent document cited in search report | Publication date | Patent family member(s) | | Publication date |
|---|---|---|---|---|
| US 2024211917 A1 | 27-06-2024 | EP | 4390818 A1 | 26-06-2024 |
| | | JP | 2024091105 A | 04-07-2024 |
| | | KR | 20240101347 A | 02-07-2024 |
| | | US | 2024211917 A1 | 27-06-2024 |
| US 2023186601 A1 | 15-06-2023 | EP | 4121887 A1 | 25-01-2023 |
| | | EP | 4121895 A1 | 25-01-2023 |
| | | GB | 2593551 A | 29-09-2021 |
| | | GB | 2593553 A | 29-09-2021 |
| | | US | 2023177391 A1 | 08-06-2023 |
| | | US | 2023186601 A1 | 15-06-2023 |
| | | WO | 2021186174 A1 | 23-09-2021 |
| | | WO | 2021186176 A1 | 23-09-2021 |
| US 2022138784 A1 | 05-05-2022 | CN | 114445221 A | 06-05-2022 |
| | | EP | 3992895 A1 | 04-05-2022 |
| | | JP | 7177880 B2 | 24-11-2022 |
| | | JP | 2022073891 A | 17-05-2022 |
| | | US | 2022138784 A1 | 05-05-2022 |
| US 2023342747 A1 | 26-10-2023 | US | 2023098811 A1 | 30-03-2023 |
| | | US | 2023342747 A1 | 26-10-2023 |

EPO FORM P0459

For more details about this annex : see Official Journal of the European Patent Office, No. 12/82

**REFERENCES CITED IN THE DESCRIPTION**

**Patent documents cited in the description**

- JP 2022039930 A
- JP 2020077275 A
- US 20230368625
- US 20200151692
- JP 2021197106 A